# EUROPÄISCHE PATENTANMELDUNG

(11) **EP 1 854 817 A1**
(43) Veröffentlichungstag der Anmeldung: **14.11.2007**
(21) Anmeldenummer: 06113651.1
(22) Anmeldetag: 09.05.2006
(51) Int. Cl.: C08G 18/12, C08G 18/48, C09J 175/00

(54) **Zweikomponentige Polyurethanzusammensetzung mit hoher Frühfestigkeit**

(71) Anmelder: Sika Technology AG, 6340 Baar (CH)
(72) Erfinder: Kislig, Stefan, 8967, Zürich (CH)

(57) **Zusammenfassung**

Die Erfindung betrifft zweikomponentige Polyurethanzusammensetzungen mit einer hohen Frühfestigkeit, bestehend aus einer ersten Komponente A, welche auch allein durch Reaktion mit Luftfeuchtigkeit aushärtet, und einer zweiten Komponente B, welche Wasser und eine Säure enthält.

## Beschreibung

### Technisches Gebiet

Die Erfindung betrifft zweikomponentige Polyurethanzusammensetzungen mit einer hohen Frühfestigkeit, geeignet als elastische Klebstoffe, Dichtstoffe oder Beschichtungen.

### Stand der Technik

Polyurethanzusammensetzungen werden unter anderem eingesetzt für verschiedenartige Verklebungen, Abdichtungen und Beschichtungen. Speziell geeignet sind sie für Verklebungen oder Abdichtungen, welche eine Elastizität der Klebeverbindung erfordern. Für gewisse Klebeanwendungen ist es erforderlich, dass die Klebeverbindung schon kurz nach der Applikation des Klebstoffes einer mechanischen Belastung ausgesetzt wird, beispielsweise weil die verklebten Bauteile bewegt werden, oder weil eine allfällige Fixierung entfernt werden soll. Um solche frühzeitigen Belastungen zu ermöglichen, soll die Klebeverbindung eine möglichst hohe "Frühfestigkeit" aufweisen, das heisst in bestimmter Weise belastbar sein zu einem Zeitpunkt, an dem der Klebstoff erst teilweise ausgehärtet ist. Die Anforderungen, welche in der Praxis an die Frühfestigkeit einer Klebeverbindung gestellt werden, variieren stark und hängen insbesondere ab vom konkreten Fertigungsprozess, dem Gewicht der verklebten Bauteile sowie der Art der mechanischen Belastung.

Mit elastischen Klebstoffen auf der Basis konventioneller zweikomponentiger Polyurethanzusammensetzungen lassen sich relativ schnell hohe Frühfestigkeiten erreichen, und zwar besonders dann, wenn die Isocyanatgruppen enthaltende Komponente mit einer zweiten Komponente kombiniert wird, welche primäre oder sekundäre Aminogruppen enthält. Solche zweikomponentigen Polyurethanzusammensetzungen sind jedoch aufwändig in der Handhabung. Das festgelegte Mischungsverhältnis zwischen den beiden Komponenten muss genau eingehalten werden, da sonst der Klebstoff nicht wie gewünscht aushärtet und folglich eine mangelhafte Klebeverbindung entsteht, welche die erforderliche Festigkeit nicht erreicht. Die Vermischung der beiden Komponenten muss aufgrund der sehr hohen Reaktivität der Aminogruppen gegenüber den Isocyanatgruppen überdies sehr rasch und effizient erfolgen und erlaubt keine Prozessunterbrüche, weil der Mischer sonst verstopft.

Einfacher in der Handhabung sind einkomponentige Polyurethanzusammensetzungen. Sie enthalten Polyurethanpolymere mit endständigen Isocyanatgruppen, welche bei Kontakt mit Wasser in Form von Luftfeuchtigkeit reagieren und somit vernetzen. Da die Aushärtung durch den Kontakt mit Luftfeuchtigkeit erfolgt, härten diese Klebstoffe von aussen nach innen, wobei die Aushärtungsgeschwindigkeit gegen innen abnimmt, da das für die Aushärtung erforderliche Wasser durch die zunehmend dicker werdende ausgehärtete Materialschicht hindurchdiffundieren muss. Wegen der relativ langsamen Aushärtung lassen sich mit solchen einkomponentigen Polyurethanzusammensetzungen nur unbefriedigende Frühfestigkeiten erreichen.

Um das Problem der geringen Verfügbarkeit von Wasser und damit langsamen Aushärtung in einer einkomponentigen Polyurethanzusammensetzung zu lösen, wurden Systeme entwickelt, in denen Wasser in Form einer wasserhaltigen zweiten Komponente in eine einkomponentige Polyurethanzusammensetzung eingemischt wird, beschrieben beispielsweise in EP 0 678 544 B1. Diese Systeme härten zwar schneller aus; sie weisen aber den Nachteil auf, dass sie bei der Aushärtung zur Ausbildung von Blasen neigen, welche die Festigkeit und das Adhäsionsverhalten einer Klebeverbindung negativ beeinflussen.

Zusätzlich gibt es einkomponentige Polyurethanzusammensetzungen, die "latente Härter" oder "latente Polyamine", beispielsweise in Form von Polyaldiminen, enthalten, welche als durch Feuchtigkeit aktivierbare Vernetzer für Isocyanat-haltige Polyurethanzusammensetzungen dienen. Die Verwendung eines latenten Härters in Isocyanat-haltigen Systemen hat dabei den Vorteil, dass sich die Entstehung von unerwünschten Gasblasen im ausgehärteten Kunststoff vermeiden lässt, da die Aushärtungsreaktion über den latenten Härter - im Gegensatz zur direkten Reaktion des Isocyanats mit Feuchtigkeit - nicht unter Freisetzung von Kohlendioxid (CO₂) verläuft. Auch können latente Härter die Aushärtungsgeschwindigkeit erhöhen.

Zur Erhöhung der Aushärtungsgeschwindigkeit und der Frühfestigkeit können in den einkomponentigen Polyurethanzusammensetzungen zusätzlich Katalysatoren eingesetzt werden, welche die Hydrolyse des latenten Härters oder die Reaktion zwischen Isocyanatgruppen und Wasser beschleunigen. Die Verwendung eines Katalysators hat jedoch den Nachteil, dass die Lagerstabilität der Isocyanat-haltigen Zusammensetzung vermindert werden kann, indem während der Lagerung vermehrt unerwünschte Reaktionen zwischen den Reaktivgruppen, insbesondere der Isocyanatgruppen, ausgelöst werden. Dies tritt besonders dann auf, wenn grosse Mengen von Katalysatoren eingesetzt werden sollen, um die zur Erreichung hoher Frühfestigkeit benötigte rasche Aushärtung zu erzielen.

WO 03/059978 A1 beschreibt zweikomponentige Polyurethanzusammensetzungen mit hoher Frühfestigkeit, welche ohne die Bildung von Blasen aushärten. Die erste Komponente besteht aus einer Polyurethanzusammensetzung enthaltend Aldimine, welche mit Luftfeuchtigkeit auch allein, d.h. ohne zweite Komponente, aushärten kann. Die zweite Komponente enthält an ein Trägermaterial gebundenes Wasser. Diese Zusammensetzungen härten ohne Bildung von Blasen aus und weisen den Vorteil auf, dass das Mischungsverhältnis der beiden Komponenten nicht exakt eingehalten werden muss. Wie oben erwähnt, ist die Katalysierbarkeit der Isocyanat-haltigen ersten Komponente aus Gründen der Lagerstabilität allerdings begrenzt, wodurch die Geschwindigkeit der Aushärtung solcher Zusammensetzungen beschränkt bleibt. Für Anwendungen, welche bereits zu einem sehr frühen Zeitpunkt eine hohe Frühfestigkeit erfordern, sind diese Polyurethanzusammensetzungen nicht geeignet.

### Darstellung der Erfindung

Aufgabe der vorliegenden Erfindung ist es daher, eine als elastischer Kleb- oder Dichtstoff geeignete zweikomponentige Polyurethanzusammensetzung zur Verfügung zu stellen, welche schnell und blasenfrei aushärtet und damit Klebeverbindungen ermöglicht, die über eine sehr hohe Frühfestigkeit verfügen.

Diese Aufgabe wird gelöst mittels einer zweikomponentigen Zusammensetzung bestehend aus a) einer ersten Komponente **A** umfassend (i) mindestens ein Isocyanatgruppen enthaltendes Polyurethanpolymer **P** und (ii) mindestens ein latentes Polyamin **LA**; und b) einer zweiten Komponente **B**, umfassend (i) mindestens eine Säure **K** und (ii) Wasser. Die Komponente **A** härtet auch allein mit Luftfeuchtigkeit aus.

Mit einer solchen zweikomponentigen Zusammensetzung werden praxistaugliche elastische Kleb- oder Dichtstoffe erhalten, die schnell eine sehr hohe Frühfestigkeit erreichen und flexibler in ihrer Anwendung sind als bisherige Systeme.

Die in der Komponente **B** enthaltene Säure katalysiert die Hydrolyse und somit die Freisetzung des in der Komponente **A** enthaltenen latenten Polyamins **LA**, was eine starke Beschleunigung der Aushärtung bewirkt, und somit Klebeverbindungen ermöglicht, die zu einem sehr frühen Zeitpunkt eine hohe Festigkeit aufweisen. Mit diesem System ist es möglich, mit der selben, lagerstabilen Komponente **A** stark unterschiedliche Anforderungen an die Aushärtungsgeschwindigkeit, insbesondere die Frühfestigkeit, zu erfüllen, indem der Anteil der Komponente **B** so verändert wird, dass die gewünschte Aushärtungsgeschwindigkeit erreicht wird, oder indem eine Komponente B mit einem auf die gewünschte Aushärtungsgeschwindigkeit angepassten Gehalt an Säure **K** verwendet wird.

### Wege zur Ausführung der Erfindung

Gegenstand der Erfindung sind zweikomponentige Zusammensetzungen, bestehend aus
a) einer ersten Komponente **A**, welche auch allein mit Feuchtigkeit aushärtet, umfassend (i) mindestens ein Isocyanatgruppen enthaltendes Polyurethanpolymer **P** und (ii) mindestens ein latentes Polyamin **LA**, und
b) einer zweiten Komponente **B**, umfassend (i) mindestens eine Säure **K** und (ii) Wasser.

Mit "Poly" beginnende Substanznamen wie Polyaldimin, Polyamin, Polyisocyanat oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter einem "latenten Härter" oder einem "latenten Polyamin" wird im vorliegenden Text unterschiedslos ein Derivat eines Polyamins mit aliphatischen primären und/oder sekundären Aminogruppen verstanden, das keine freien, sondern ausschliesslich blockierte Aminogruppen enthält und dadurch mit Isocyanaten mindestens während einer gewissen Zeit keine direkte Reaktion eingeht. Durch Kontakt mit Wasser hydrolysieren die blockierten Aminogruppen des latenten Polyamins ganz oder teilweise, worauf dieses mit Isocyanaten zu reagieren beginnt. Diese Reaktionen führen bei Isocyanatgruppen enthaltenden Polyurethanpolymeren zur Vernetzung.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Die zweikomponentige Zusammensetzung besteht aus einer ersten Komponente **A,** welche auch allein mit Feuchtigkeit aushärtet, und einer zweiten Komponente **B.**

Die Komponente **A** umfasst mindestens ein Isocyanatgruppen enthaltendes Polyurethanpolymer **P.**

Ein geeignetes Polyurethanpolymer **P** ist beispielsweise erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.2 bis 5, insbesondere eines von 1.5 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt nach der Umsetzung aller Hydroxylgruppen des Polyols ein Gehalt an freien Isocyanatgruppen von 0.5 bis 5 Gewichts-%, bezogen auf das gesamte Polyurethanpolymer **P.**

Gegebenenfalls kann das Polyurethanpolymer **P** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers P können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar® CTBN von Noveon) hergestellt werden können.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P** mitverwendet werden.

Als Polyisocyanate für die Herstellung eines Isocyanatgruppen enthaltenden Polyurethan polymers **P** können handelsübliche aliphatische, cycloaliphatische oder aromatische Polyisocyanate, insbesondere Diisocyanate, verwendet werden, beispielsweise die folgenden: 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Üblicherweise ist das Polyurethanpolymer **P** in einer Menge von 10 - 80 Gewichts-%, bevorzugt in einer Menge von 15-50 Gewichts-%, bezogen auf die gesamte zweikomponentige Zusammensetzung, vorhanden.

Die Komponente **A** der zweikomponentigen Zusammensetzung enthält neben dem Polyurethanpolymer **P** mindestens ein latentes Polyamin **LA**.

Geeignete latente Polyamine **LA** sind beispielsweise Polyoxazolidine, Polyenamine, Polyketimine und Polyaldimine. In diesen latenten Polyaminen **LA** stellen Oxazolidino-, Enamino-, Ketimino- und Aldiminogruppen blockierte Aminogruppen dar.

Polyoxazolidine sind Verbindungen, welche zwei oder mehr Oxazolidinogruppen der Formel (VI) enthalten, 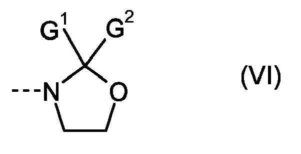 wobei G¹ für eine Kohlenwasserstoffgruppe steht und G² entweder für ein Wasserstoffatom oder für eine Kohlenwasserstoffgruppe steht.

Oxazolidinogruppen haben die Eigenschaft, zu 2-Hydroxyethylamino-Gruppen zu hydrolysieren, wobei ein Keton oder ein Aldehyd abgespalten wird.

Als latente Polyamine **LA** geeignete Polyoxazolidine sind beispielsweise erhältlich durch die Umsetzung von N-(2-Hydroxyethyl)-oxazolidinen der Formel (VII) 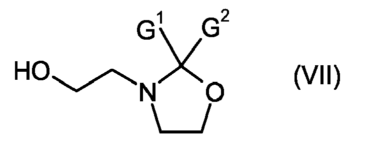 mit beispielsweise Polyisocyanaten. In der Formel (VII) haben G¹ und G² die bereits für die Formel (VI) genannte Bedeutung. N-(2-Hydroxyethyl)-oxazolidine der Formel (VII) sind ihrerseits beispielsweise erhältlich durch die Umsetzung von Diethanolamin mit einem Keton oder Aldehyd unter Abspaltung von Wasser.

Ein Beispiel für ein kommerziell erhältliches Polyoxazolidin ist Härter OZ (von Bayer).

Als latente Polyamine **LA** geeignete Polyenamine sind beispielsweise erhältlich durch die Umsetzung von Polyaminen enthaltend mindestens zwei sekundäre Aminogruppen mit aliphatischen oder cycloaliphatischen Aldehyden oder Ketonen, die in α-Stellung zur Carbonylgruppe mindestens eine C-H-Gruppierung aufweisen, unter Abspaltung von Wasser.

Für diese Umsetzung geeignete Polyamine mit mindestens zwei sekundären Aminogruppen sind beispielsweise Piperazin, 4,4'-Dipiperidylpropan, N,N'-Dimethyl-hexamethylendiamin und Homologe mit höheren Alkyl- oder Cycloalkylgruppen anstelle der Methylgruppen, sowie weitere Polyamine mit zwei sekundären Aminogruppen, wie sie beispielsweise für zweikomponentige Polyurethane verwendet werden.

Geeignete Aldehyde, welche in α-Stellung zur Carbonylgruppe mindestens eine C-H-Gruppierung aufweisen, sind beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd.

Geeignete Ketone sind insbesondere cyclische Ketone, beispielsweise Cyclopentanon und Cyclohexanon sowie deren Derivate.

Als latente Polyamine **LA** geeignet sind weiterhin Polyketimine und Polyaldimine. Geeignete Polyketimine oder Polyaldimine, sind in einer ersten Ausführungsform erhältlich durch die Umsetzung von Polyaminen **PA** mit aliphatischen primären Aminogruppen mit Ketonen oder Aldehyden nach bekannten Verfahren unter Abspaltung von Wasser.

Geeignete Polyamine **PA** mit aliphatischen primären Aminogruppen sind beispielsweise die folgenden: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich, beispielsweise unter dem Namen Jeffamine® (von Huntsman Chemicals), unter dem Namen Polyetheramin (von BASF), oder unter dem Namen PC Amine® (von Nitroil), sowie Mischungen der vorgenannten Polyamine.

Als Polyamine **PA** bevorzugt sind 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,4-Diamino-2,2,6-trimethylcyclohexan, Polyoxyalkylen-Polyamine mit theoretisch zwei oder drei Aminogruppen wie die unter dem Handelsnamen Jeffamine® erhältlichen Typen EDR-148, D-230, D-400, D-2000, T-403 und T-5000 von Huntsman und dazu analoge Verbindungen von BASF oder Nitroil, sowie insbesondere Mischungen von zwei oder mehr der vorgenannten Polyamine.

In einer zweiten Ausführungsform sind als latente Polyamine **LA** geeignete Polyketimine und Polyaldimine erhältlich ausgehend von einem Amin **C**, welches neben einer oder zwei aliphatischen primären Aminogruppen noch eine weitere Reaktivgruppe, welche einen aktiven Wasserstoff enthält, aufweist. Der Begriff "aktiver Wasserstoff" bezeichnet im vorliegenden Dokument ein deprotonierbares, an ein Stickstoff-, Sauerstoff- oder Schwefelatom gebundenes Wasserstoffatom. Ein solches Amin **C** wird mit Ketonen oder Aldehyden nach bekannten Verfahren unter Abspaltung von Wasser in ein Ketimin oder Aldimin enthaltend einen aktiven Wasserstoff überführt, und dieses Ketimin oder Aldimin anschliessend durch die Umsetzung mit beispielsweise einem Polyisocyanat in entsprechende Polyketimine oder Polyaldimine überführt.

Als Amin **C** geeignet sind Verbindungen der Formel (III), 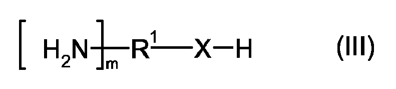 wobei
m für 1 oder 2, bevorzugt für 1, steht,
R¹ für einen (m+1)-wertigen Kohlenwasserstoffrest mit 2 bis 12 C-Atomen steht, welcher gegebenenfalls mindestens ein Heteroatom enthält, insbesondere in Form von Ether-Sauerstoff oder tertiärem Amin-Stickstoff, und
X für O, S oder N-R⁶ steht, wobei R⁶ entweder (i) für einen einwertigen Kohlenwasserstoffrest mit 1 bis 20 C-Atomen steht, welcher gegebenenfalls mindestens eine Carbonat-, Nitril-, Nitro-, Phosphonat-, Sulfon- oder Sulfonatgruppe aufweist, oder (ii) für -R⁷-NH₂ steht, wobei R⁷ für einen zweiwertigen Kohlenwasserstoffrest steht, welcher gegebenenfalls Heteroatome enthält, insbesondere in Form von Ether-Sauerstoff oder tertiärem Amin-Stickstoff.

Als Amin C geeignet sind beispielsweise die im Folgenden genannten Verbindungen:
- aliphatische Hydroxyamine wie 5-Amino-1-pentanol, 6-Amino-1-hexanol, 7-Amino-1-heptanol, 8-Amino-1-octanol, 10-Amino-1-decanol, 12-Amino-1-dodecanol;
- aliphatische Mercaptoamine wie 6-Amino-1-hexanthiol, 8-Amino-1-octanthiol, 10-Amino-1-decanthiol, 12-Amino-1-dodecanthiol;
- zwei- oder mehrwertige aliphatische Amine, welche neben einer oder zwei primären Aminogruppen eine sekundäre Aminogruppe tragen, wie N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, Diethylentriamin (DETA), Dipropylentriamin (DPTA), Bis-hexamethylentriamin (BHMT) und Fettdiamine wie N-Cocoalkyl-1,3-propandiamin, N-Oleyl-1,3-propandiamin, N-Soyaalkyl-1,3-propandiamin und N-Talgalkyl-1,3-propandiamin.

Als latente Polyamine **LA** geeignete Polyketimine sind beispielsweise erhältlich durch die Umsetzung von mindestens einem Polyamin **PA** mit mindestens einem Keton unter Abspaltung von Wasser, oder durch Umsetzung von mindestens einem Amin **C** mit mindestens einem Keton unter Abspaltung von Wasser und anschliessender Umsetzung des entstandenen Ketimins mit beispielsweise einem Polyisocyanat.

Für diese Umsetzungen geeignete Ketone sind beispielsweise Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon, Acetylaceton und Actetophenon.

Als latente Polyamine **LA** weiterhin geeignet sind Verbindungen, die eine Kombination von zwei oder drei blockierten Aminogruppen ausgewählt aus der Gruppe umfassend Oxazolidino-, Enamino-, Ketimino- und Aldiminogruppen aufweisen, wobei mindestens zwei dieser blockierten Aminogruppen verschieden voneinander sind, also beispielsweise Oxazolidin-Aldimine, Ketimin-Enamine oder Aldimin-Enamine. Die Oxazolidino-, Enamino-, Ketimino- und Aldiminogruppen dieser Verbindungen entsprechen dabei jenen in den oben beschriebenen Polyoxazolidinen, Polyenaminen, Polyketiminen und Polyaldiminen.

Als latente Polyamine **LA** bevorzugt sind Polyaldimine.

Geeignete Polyaldimine sind in einer ersten Ausführungsform erhältlich durch die Umsetzung von mindestens einem Polyamin **PA** mit mindestens einem Aldehyd.

In einer zweiten Ausführungsform sind geeignete Polyaldimine erhältlich durch die Umsetzung eines Amins **C** der Formel (III) mit mindestens einem Aldehyd und nachfolgender Umsetzung des entstandenen Aldimins mit einem Polyisocyanat.

Es ist auch möglich, Dialdehyde zur Herstellung von Polyaldiminen zu verwenden, wobei oligomere Produkte gebildet werden.

Für diese Umsetzungen geeignete Aldehyde sind beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd, sowie die im Folgenden dargestellten Aldehyde **ALD.**

Als Aldehyde für diese Umsetzungen bevorzugt sind Aldehyde **ALD.** Diese zeichnen sich dadurch aus, dass sie in α-Stellung zur Carbonylgruppe keine C-H-Gruppierung aufweisen und dadurch nicht enolisierbar sind. Aus Aldehyden **ALD** abgeleitete Polyaldimine haben die Eigenschaft, keine tautomeren Enamine zu bilden, da sie als Substituenten in α-Stellung zum C-Atom der Aldiminogruppe keinen Wasserstoff enthalten. Solche Polyaldimine bilden zusammen mit Isocyanatgruppen enthaltenden Polyurethanpolymeren **P** besonders lagerfähige Gemische, insbesondere auch dann, wenn das Polyurethanpolymer **P** hochreaktive aromatische Isocyanatgruppen, wie diejenigen von TDI und MDI, aufweist.

Als Aldehyde **ALD** geeignet sind Verbindungen der Formeln (I) und (II), 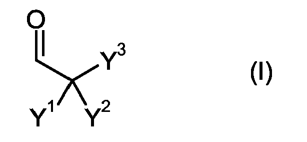 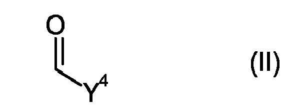 wobei
Y¹ und Y² entweder, unabhängig voneinander, je für einen einwertigen Kohlenwasserstoffrest mit 1 bis 12 C-Atomen stehen, oder zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen, ist, und
Y³ für einen einwertigen Kohlenwasserstoffrest steht, welcher gegebenenfalls mindestens ein Heteroatom, insbesondere Sauerstoff in Form von Ether-, Carbonyl- oder Ester-Gruppen, aufweist, und
Y⁴ entweder für eine substituierte oder unsubstituierte Aryl- oder Heteroaryl-Gruppe steht, welche eine Ringgrösse zwischen 5 und 8, bevorzugt 6, Atomen aufweist;
oder für 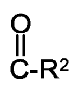 steht, wobei R² für ein Wasserstoffatom oder für eine Alkoxygruppe steht;
oder für eine substituierte oder unsubstituierte Alkenyl- oder Arylalkenylgruppe mit mindestens 6 C-Atomen steht.

Die Aldehyde **ALD** der Formel (1) und (11) haben die Eigenschaft, dass ihre Reste Y¹, Y², Y³ und Y⁴ keine Gruppierungen aufweisen, die in Abwesenheit von Wasser mit Isocyanatgruppen reaktionsfähig sind; insbesondere weisen Y¹, Y², Y³ und Y⁴ keine Hydroxylgruppen, sekundäre Aminogruppen, Harnstoffgruppen oder andere Gruppen mit aktivem Wasserstoff auf.

Geeignete Aldehyde **ALD** der Formel (I) sind beispielsweise 2,2-Dimethyl-propanal, 2,2-Dimethyl-butanal, 2,2-Diethyl-butanal, 1-Methylcyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Insbesondere geeignete Aldehyde **ALD** der Formel (1) sind Verbindungen der Formel (I a), 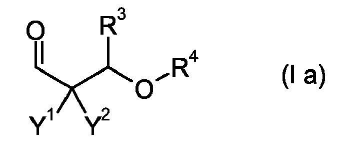 wobei R³ für ein Wasserstoffatom oder für eine Alkyl- oder Arylalkylgruppe und R⁴ für eine Alkyl- oder Arylalkylgruppe steht und Y¹und Y² die bereits genannten Bedeutungen aufweisen.

Verbindungen der Formel (I a) stellen Ether von aliphatischen, araliphatischen oder alicyclischen 2,2-disubstituierten 3-Hydroxyaldehyden dar, wie sie aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären alicyclischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd, entstehen, mit Alkoholen, wie beispielsweise Methanol, Ethanol, Propanol, Isopropanol, Butanol, 2-Ethylhexanol oder Fettalkoholen, dar. Beispiele für Verbindungen der Formel (Ia) sind 2,2-Dimethyl-3-methoxy-propanal, 2,2-Dimethyl-3-ethoxy-propanal, 2,2-Dimethyl-3-isopropoxy-propanal, 2,2-Dimethyl-3-butoxy-propanal und 2,2-Dimethyl-3-(2-ethylhexyloxy)-propanal.

Insbesondere geeignete Aldehyde **ALD** der Formel (I) sind weiterhin Verbindungen der Formel (I b), 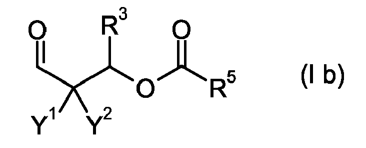 wobei
R³ wiederum für ein Wasserstoffatom oder für eine Alkyl- oder Arylalkylgruppe steht,
R⁵ für ein Wasserstoffatom oder eine Alkyl- oder Arylalkyl- oder Arylgruppe, gegebenenfalls mit mindestens einem Heteroatom, insbesondere mit mindestens einem Ether-Sauerstoff, und gegebenenfalls mit mindestens einer Carboxylgruppe, und gegebenenfalls mit mindestens einer Estergruppe, oder eine einfach oder mehrfach ungesättigte lineare oder verzweigte Kohlenwasserstoffkette steht,
und Y¹ und Y² die bereits genannten Bedeutungen aufweisen.

Verbindungen der Formel (I b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethylbutanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit aliphatischen oder aromatischen Carbonsäuren, wie beispielsweise Ameisensäure, Essigsäure, Propionsäure, Buttersäure, Isobuttersäure, Valeriansäure, Capronsäure, 2-Ethyl-capronsäure, Caprinsäure, Laurinsäure, Myristinsäure, Palmitinsäure, Stearinsäure und Benzoesäure, dar.

Bevorzugte Verbindungen der Formel (I b) sind Ester aus 2,2-Dimethyl-3-hydroxypropanal und den genannten Carbonsäuren, wie beispielsweise 2,2-Dimethyl-3-formyloxy-propanal, 2,2-Dimethyl-3-acetoxy-propanal, 2,2-Dimethyl-3-isobutyroxy-propanal, 2,2-Dimethyl-3-(2-ethylhexanoyloxy)-propanal, 2,2-Dimethyl-3-lauroyloxy-propanal, 2,2-Dimethyl-3-palmitoyloxy-propanal, 2,2-Dimethyl-3-stearoyloxy-propanal und 2,2-Dimethyl-3-benzoyloxypropanal, sowie analoge Ester anderer 2,2-disubstituierter 3-Hydroxyaldehyde.

In einer bevorzugten Herstellmethode eines Aldehyds **ALD** der Formel (I b) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Es ist auch möglich, Aldehyde **ALD** der Formel (I b) herzustellen, indem zur Veresterung eines 2,2-disubstituierten 3-Hydroxyaldehyds eine aliphatische oder cycloaliphatische Dicarbonsäure, wie beispielsweise Bernsteinsäure, Adipinsäure oder Sebacinsäure, verwendet wird. Auf diese Weise werden entsprechende tertiäre aliphatische oder tertiäre cycloaliphatische Dialdehyde erhalten.

In einer besonders bevorzugten Ausführungsform sind die Aldehyde ALD der Formel (I) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde **ALD** der Formel (I) sind insbesondere Aldehyde **ALD** der Formel (I b), in welcher der Rest R⁵ entweder für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht.

Beispiele für geruchsfreie Aldehyde **ALD** der Formel (I b) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (I b) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Geeignete Aldehyde **ALD** der Formel (II) sind beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2-und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd, 10-Methylanthracen-9-carbaldehyd, 9-Ethyl-3-carbazolcarbaldehyd, Pyrencarbaldehyd, Nicotinaldehyd, Terephthaldehyd und Isophthaldehyd.

Geeignete Aldehyde ALD der Formel (11) sind weiterhin Glyoxal, Glyoxalsäureester, beispielsweise Glyoxalsäuremethylester, Zimtaldehyd und substituierte Zimtaldehyde.

Wie bereits erwähnt, stellen die latenten Polyamine **LA** in der ersten Komponente **A** der zweikomponentigen Zusammensetzung bevorzugt Polyaldimine dar. Die besonders bevorzugten Polyaldimine, welche ausgehend von Aldehyden **ALD** der Formel (I) und (II) erhältlich sind, sind Verbindungen der Formel (IV) oder (V), 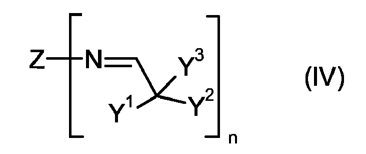 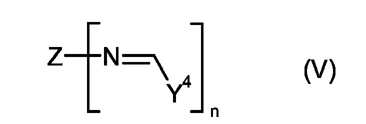
wobei Y¹, Y², Y³ und Y⁴ die bereits bei den Formeln (I) und (II) beschriebenen Bedeutungen aufweisen,
n für 2 oder 3 steht, und
Z für den Rest eines Polyamins nach Entfernung von n primären aliphatischen Aminogruppen steht.
Z kann entweder (i) für den Rest eines Polyamins **PA** nach Entfernung von n primären aliphatischen Aminogruppen stehen, oder (ii) für den Rest eines hypothetischen direkten Umsetzungsprodukts aus mindestens einem Polyisocyanat und mindestens einem Amin **C** nach Entfernung von n primären aliphatischen Aminogruppen stehen.

Üblicherweise ist soviel an latentem Polyamin **LA** in der Komponente **A** der zweikomponentigen Zusammensetzung vorhanden, dass die Anzahl blockierter Aminogruppen kleiner oder höchstens gleich gross ist wie die Anzahl Isocyanatgruppen. Insbesondere liegt das Verhältnis zwischen der Anzahl der blockierten Aminogruppen und der Isocyanatgruppen im Bereich von 0.1 bis 1.0, bevorzugt 0.3 bis 0.9, besonders bevorzugt 0.4 bis 0.8.

Die zweikomponentige Zusammensetzung besteht neben der Komponente **A** aus einer zweiten Komponente **B**, umfassend mindestens eine Säure **K** und Wasser.

Die Säure **K** ist eine beliebige Brønsted-Säure, wie beispielsweise Salzsäure, Schwefelsäure, Schweflige Säure, Amidoschwefelsäure, Phosphorsäure, Mono- und Dialkyl- und -arylphosphate wie Tridecylphosphat, Dibutylphosphat, Diphenylphosphat und Bis-(2-ethylhexyl)phosphat, Phosphorige Säure, Salpetersäure, Salpetrige Säure, Perchlorsäure, Chlorige Säure, Borsäure, sowie beliebige organische Brønsted-Säuren, sowie Mischungen der vorgenannten Brønsted-Säuren.

Bevorzugt als Säure **K** sind organische Brønsted-Säuren wie beispielsweise
- Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, Oenanthsäure, Caprylsäure, 2-Ethylhexansäure, Pelargonsäure, Caprinsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; einfach oder mehrfach ungesättigte aliphatische Mono- und Polycarbonsäuren wie Palmitoleinsäure, Ölsäure, Erucasäure, Sorbinsäure, Linolsäure, Linolensäure, Elaeostearinsäure, Ricinolsäure, Ricinensäure, Maleinsäure, Fumarsäure, Sorbinsäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure; aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure; technische Carbonsäure-Gemische wie zum Beispiel Versatic-Säuren; Polycarbonsäuren aus der Polymerisation oder Copolymerisation von Acryl- und Methacrylsäure;
- Sulfonsäuren wie Methylsulfonsäure, Vinylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalindisulfonsäure;
- organische Phosphonsäuren und Monoalkylphosphonate wie Methylphosphonsäure, Vinylphosphonsäure, Butylphosphonsäure, 2-Hydroxyethylphosphonsäure, Phenylphosphonsäure, Toluylphosphonsäure, Xylylphosphonsäure, Phosphonoessigsäure, Etidronsäure, Methylphosphonsäure-ethylester;
sowie Mischungen der vorgenannten Brønsted-Säuren.

Als Säure **K** bevorzugt sind organische Brønsted-Säuren in Form von Carbonsäuren und Sulfonsäuren, insbesondere aromatische Carbonsäuren wie Benzoesäure und Salicylsäure. Besonders bevorzugt ist Salicylsäure.

Die Säure **K** hat eine katalytische Wirkung auf die Hydrolyse des latenten Polyamins **LA** der Komponente **A.** Dadurch bewirkt sie, je nach Konzentration und Säurestärke, eine mehr oder weniger starke Beschleunigung der Aushärtung der zweikomponentigen Zusammensetzung.

Üblicherweise ist die Säure **K** in der Komponente **B** in einer Menge von 0.1 bis 10 Gewichts-% bezogen auf die Komponente **B** vorhanden. Bevorzugt ist eine Menge der Säure **K** von 0.3 bis 5 Gewichts-% bezogen auf die Komponente **B.**

Des weiteren enthält die Komponente **B** Wasser.

Das Wasser kann entweder in freier Form vorliegen, oder es kann an ein Trägermaterial gebunden sein. Die Bindung an ein gegebenenfalls vorhandenes Trägermaterial ist reversibel, das heisst, das Wasser ist für die Reaktion mit dem latenten Polyamin **LA** der ersten Komponente **A** zugänglich.

Als Trägermaterialien für die Komponente **B** geeignet sind poröse Materialien, welche Wasser in Hohlräume einschliessen. Insbesondere handelt es sich hier um spezielle Silicate und Zeolithe. Besonders geeignet sind Kieselgur und Molekularsiebe. Die Grösse der Hohlräume ist dabei so zu wählen, dass sie für die Aufnahme von Wasser optimal sind. Deshalb zeigen sich Molekularsiebe mit der Porengrösse von 4 Å als besonders geeignet.

Weitere geeignete Trägermaterialien sind solche, die Wasser in nicht stöchiometrischen Mengen aufnehmen und eine pastöse Konsistenz haben oder Gels bilden. Solche Trägermaterialien können anorganisch oder organisch sein. Beispiele hierfür sind Kieselgele, Tone, wie Montmorillonite, Bentonite, Hectorite oder Polysaccharide, wie Zellulose und Stärke, oder Polyacrylsäuren, die auch unter dem Begriff "Super-Absorber" bekannt sind und beispielsweise in der Herstellung von Hygieneartikel zum Einsatz kommen. Weiterhin sind ionische Gruppen tragende Trägermaterialien geeignet, wie zum Beispiel Polyurethanpolymere mit Carboxylgruppen oder Sulfonsäuregruppen als Seitenketten, respektive deren Salze.

Weiterhin geeignete Formen von an ein Trägermaterial gebundenem Wasser sind beispielsweise Hydrate und Aquakomplexe, insbesondere anorganische Verbindungen, die Wasser koordinativ gebunden oder als Kristallwasser enthalten. Beispiele für Hydrate sind Na₂SO₄·10H₂O, CaSO₄·2H₂O, CaO₄·½H₂O, Na₂B₄O₇·10H₂O, MgSO₄·7H₂O. Beispiele für Aquakomplexe sind die Hexaquakomplexe von Eisen (II), Eisen (III), Kobalt (II), Kobalt (III) und Nickel (II), sowie gemischte Komplexe wie [(H₂O)₄Co(NH₃)₂]³⁺ oder [Cl(H₂O)₃Co(NH₃)₂]²⁺.

Die Vermischung der beiden Komponenten A und B führt zur weitgehend unmittelbaren Verfügbarkeit von Wasser in der gesamten zweikomponentigen Zusammensetzung, wodurch diese viel schneller aushärtet als eine einkomponentige Polyurethanzusammensetzung, in welcher Wasser ausschliesslich durch Diffusion von Luftfeuchtigkeit von aussen nach innen verfügbar ist.

Die Menge des in der Komponente **B** enthaltenen Wassers wird geeigneterweise auf diejenige Menge Wasser abgestimmt, welche notwendig ist, um die Komponente **A** vollständig auszuhärten. Die zur vollständigen Aushärtung der Komponente **A** notwendige Wassermenge in mol berechnet sich nach der Formel (Equivalent blockierte Aminogruppen) + ½ (Equivalent Isocyanatgruppen - Equivalent blockierte Aminogruppen).

Die in der Komponente **B** enthaltene Menge Wasser wird so gewählt, dass das Verhältnis der durch die Komponente **B** eingebrachten Menge Wasser zu der für die vollständige Aushärtung der Komponente **A** notwendigen Menge Wasser einen Wert von 0.5 bis 10, bevorzugt 1 bis 7.5, besonders bevorzugt 1.5 bis 5, aufweist.

Ebenso ist es bevorzugt, dass die Komponente **B** Wasser in einer mindestens stöchiometrischen Menge in Bezug auf die blockierten Aminogruppen enthält.

Das Funktionieren des System ist wenig abhängig von der Einhaltung eines bestimmten Mischungsverhältnisses zwischen den beiden Komponenten **A** und **B,** wie dies in einem konventionellen zweikomponentigen Polyurethansystem der Fall ist. Eine stöchiometrische Überdosierung des Wassers in Bezug auf die blockierten Aminogruppen führt nicht zu einer Störung der Aushärtung der Zusammensetzung, da die maximale Menge der Aminogruppen, welche durch die Hydrolyse freigesetzt werden können und mit den Isocyanatgruppen der Komponente **A** reagieren, durch das in der Komponente **A** vorhandene latente Polyamin **LA** festgelegt ist. Nach der Hydrolyse der blockierten Aminogruppen überschüssiges Wasser kann mit gegebenenfalls noch vorhandenen Isocyanatgruppen des Polyurethanpolymers **P** reagieren, oder es kann in der ausgehärteten Zusammensetzung zurückbleiben und von dort herausdiffundieren oder verdunsten.

Eine stöchiometrische Unterdosierung des Wassers in Bezug auf die blockierten Aminogruppen führt ebenfalls nicht zu einer Störung der Aushärtung der Zusammensetzung, da zur vollständigen Aushärtung der Zusammensetzung fehlendes Wasser durch Luftfeuchtigkeit kompensiert werden kann.

Die beschriebene zweikomponentige Zusammensetzung kann zusätzlich zu mindestens einem Polyurethanpolymer **P** und mindestens einem latenten Polyamin **LA** in der Komponente **A** und zu mindestens einer Säure **K** und Wasser in der Komponente **B** weitere Zusätze enthalten. Unter anderem können die folgenden Hilfs- und Zusatzmittel vorhanden sein, wobei dem Fachmann klar ist, ob diese für beide oder nur für je eine der beiden Komponenten **A** und **B** geeignet sind:
- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der latenten Polyamine beschleunigen, wie beispielsweise die bereits genannten Säuren K, sowie deren Anhydride oder Silylester;
- Katalysatoren, welche die Reaktion der Isocyanatgruppen mit Wasser beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel, zum Beispiel Harnstoffverbindungen, Polyamidwachse, Bentonite oder pyrogene Kieselsäuren;
- Reaktivverdünner und Vernetzer, beispielsweise monomere Polyisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat sowie Oligomere dieser Polyisocyanate, insbesondere in Form von Isocyanuraten, Carbodiimiden, Uretoniminen, Biureten, Allophanaten oder Iminooxadiazindionen, Addukte monomerer Polyisocyanate mit kurzkettigen Polyolen, sowie Adipinsäuredihydrazid und andere Dihydrazide;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, darauf zu achten, dass Zusätze, welche als Bestandteil der Komponente **A** eingesetzt werden, die Lagerstabilität der Komponente **A** nicht beeinträchtigen. Das heisst, dass diese Zusätze während der Lagerung die zur Vernetzung führenden Reaktionen wie Hydrolyse der blockierten Aminogruppen oder Vernetzung der Isocyanatgruppen nicht in signifikantem Ausmass auslösen dürfen. Insbesondere bedeutet dies, dass all diese Zusätze kein oder höchstens Spuren von Wasser enthalten sollten. Es kann sinnvoll sein, gewisse Zusätze vor dem Einmischen in die Komponente **A** chemisch oder physikalisch zu trocknen.

Bevorzugt enthält die Komponente **A** zusätzlich zu mindestens einem Polyurethanpolymer **P** und mindestens einem latenten Polyamin **LA** Weichmacher, Füllstoffe und Katalysatoren.

Als Füllstoff für die Komponente **A** bevorzugt sind Russ, Calciumcarbonate, calcinierte Kaoline, hochdisperse Kieselsäuren aus Pyrolyseprozessen, sowie Kombinationen aus diesen Füllstoffen.

Als Katalysator in der Komponente **A** bevorzugt ist ein Katalysator für die Hydrolyse der latenten Polyamine **LA,** insbesondere eine Säure **K,** oder ein Katalysator, welcher die Reaktion der Isocyanatgruppen mit Wasser beschleunigt, insbesondere Organozinnverbindungen wie Dibutylzinndilaurat, oder ein Gemisch aus einer Säure **K** und einem weiteren Katalysator, welcher die Reaktion der Isocyanatgruppen mit Wasser beschleunigt.

Bevorzugt enthält die Komponente **B** zusätzlich zu mindestens einer Säure **K** und Wasser einen Füllstoff, oder einen Weichmacher, oder einen Füllstoff und einen Weichmacher.

Die Komponente **B** soll die Aushärtung der auch allein mittels Luftfeuchtigkeit aushärtbaren Komponente **A** stark beschleunigen. Sie soll aber die mechanischen Eigenschaften wie Zugfestigkeit, Zugscherfestigkeit und Bruchdehnung der allein durch Luftfeuchtigkeit ausgehärteten Komponente **A** durch ihr Vorhandensein nicht wesentlich verändern. Das heisst insbesondere, dass die Komponente **B** keine Polyamine enthält, welche primäre oder sekundäre Aminogruppen in freier oder blockierter Form enthalten, also beispielsweise keine latenten Polyamine **LA,** insbesondere vorzugsweise keine Polyaldimine.

Es ist bevorzugt, dass die beschriebene zweikomponentige Zusammensetzung sowohl in der Komponente **A** als auch in der Komponente **B** eine Säure **K** enthält.

Die Komponente **A** der zweikomponentigen Zusammensetzung soll, wie bereits erwähnt, auch allein mit Luftfeuchtigkeit aushärten. Bevorzugt ist die Komponente **A** so formuliert, dass sie auch als einkomponentige, mittels Luftfeuchtigkeit aushärtende Polyurethanzusammensetzung eingesetzt werden kann, insbesondere als elastischer Kleb- oder Dichtstoff. Dazu ist es vorteilhaft, die Komponente **A** mit einer Säure **K** so zu katalysieren, dass eine für die einkomponentige Anwendung geeignete Aushärtungsgeschwindigkeit erreicht wird, beispielsweise auf eine Hautbildungszeit im Bereich von 20 Minuten bis 2 Stunden.

Die Katalysierung der Komponente **A** durch eine Säure **K** reicht allerdings nicht aus, um in zweikomponentiger Anwendung zusammen mit einer an ein Trägermaterial gebundenes Wasser enthaltenden zweiten Komponente ohne Säure **K,** wie in WO 03/059978A1 beschrieben, die in bestimmten Klebeanwendungen gewünschte hohe Frühfestigkeit zu einem frühen Zeitpunkt zu erreichen. Durch eine deutlich höhere Dosierung der Säure **K** in der Komponente **A** könnte eine hohe Frühfestigkeit zwar erreicht werden; allerdings verlöre die Komponente **A** dadurch die Eigenschaft, auch einkomponentig anwendbar zu sein, weil ihre Hautbildungszeit dann unzulässig kurz wäre. Zudem wäre damit zu rechnen, dass die Lagerstabilität der Komponente **A** bei einem sehr hohen Gehalt an Säure K deutlich reduziert wäre.

Die beschriebene zweikomponentige Anwendung der Komponente **A** mit einer zweiten Komponente **B,** welche neben Wasser eine Säure **K** enthält, umgeht diese Schwierigkeit auf elegante Art. So kann eine auch einkomponentig anwendbare und lagerstabile Komponente **A** für Klebeanwendungen eingesetzt werden, welche hohe Anforderungen an die Frühfestigkeit stellt; die Aushärtungsgeschwindigkeit des zweikomponentigen Systems kann dabei an die Bedürfnisse der jeweiligen Anwendung eingestellt werden, entweder über den Gehalt an Säure **K** in der Komponente **B,** oder über die Menge an Komponente **B,** die zur Komponente **A** gemischt wird. Die grosse Flexibilität in der Anwendung einer universellen Komponente **A** ist für die kommerzielle Nutzung solcher zweikomponentigen Zusammensetzungen von grossem Vorteil.

Die Herstellung der Komponente **A** erfolgt unter Ausschluss von Feuchtigkeit. Die beiden Komponenten **A** und **B** sind getrennt voneinander lagerstabil, d.h. sie können in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Üblicherweise wird die Lagerstabilität der Komponente **A** über die Messung der Viskosität oder der Auspresskraft ermittelt.

In einer Ausführungsform kann die Komponente **B** in einem wie weiter unten beschriebenen Behälter, der in einem Dosieraufsatz integriert ist, aufbewahrt werden.

Es ist auch möglich, dass die beiden Komponenten in durch Trennwände voneinander getrennte Behälter abgefüllt und gelagert werden. Beispiele für solche Behälter sind Koaxial-Kartuschen oder Zwillingskartuschen.

Für industrielle Anwendungen mit grösseren Mengen ist es üblich, die beiden Komponenten getrennt in je einem feuchtigkeitsdichten Behälter, wie beispielsweise einem Fass oder einem Hobbock, aufzubewahren.

Ein geeignetes Mischungsverhältnis der beiden Komponenten **A** und **B** hängt im Wesentlichen ab von der jeweiligen Zusammensetzung der beiden Komponenten. Die Komponente **A** härtet auch allein mit Luftfeuchtigkeit aus. Die zweite Komponente **B** führt zu einer starken Beschleunigung der Aushärtungsgeschwindigkeit der Zusammensetzung, ohne die mechanischen Eigenschaften der ausgehärteten Zusammensetzung wesentlich zu beeinflussen. Dadurch ist es naturgemäss gegeben, das Mischungsverhältnis der beiden Komponenten **A** und **B** so zu wählen, dass die Komponente **A** in einer wesentlichen grösseren Menge als die Komponente **B** in der Zusammensetzung vorhanden ist. Bevorzugt ist ein Mischungsverhältnis im Bereich von 100 Gewichtsteilen der Komponente **A** zu 0.5 bis 10 Gewichtsteilen der Komponente **B.**

Das Mischen der beiden Komponenten **A** und **B** erfolgt vorteilhaft kontinuierlich während der Applikation.

In einer ersten Ausführungsform erfolgt das Mischen der beiden Komponenten **A** und **B** mittels eines zwei ineinander greifende Dosierrotoren enthaltenden Dosieraufsatzes. Solche Dosieraufsätze sind beispielsweise in der Patentschrift EP 0 749 530 B1 beschrieben. Der Dosieraufsatz wird vorzugsweise für kleinere Anwendungen auf eine handelsübliche Kartusche aufgesetzt, welche die Komponente **A** enthält, während die Komponente **B** sich in einem Behälter befindet, welcher im Dosieraufsatz integriert ist. Die Dosierung und Mischung erfolgt bei der Applikation in diesem Dosieraufsatz, welcher passiv durch die Druckaufbeschlagung der Kartusche, beispielsweise mittels einer handelsüblichen Kartuschenpresse, betrieben wird. Für eine bessere Durchmischung kann zusätzlich ein Statikmischer an der Austrittsöffnung dieses Dosieraufsatzes angebracht werden.

In einer zweiten Ausführungsform werden die beiden Komponenten **A** und **B** aus Fässern oder Hobbock-Behältern gefördert. Hierbei werden die beiden Komponenten **A** und **B** vorteilhaft in einem Dosieraufsatz vermischt, wobei der Mischvorgang statisch oder dynamisch erfolgen kann.

In einer bevorzugten Ausführungsform erfolgt die Vermischung der beiden Komponenten **A** und **B** der Zusammensetzung im Wesentlichen homogen.

Eine typische Applikation der zweikomponentigen Zusammensetzung erfolgt, indem zuerst die beiden Komponenten **A** und **B** der Zusammensetzung wie beschrieben vermischt werden und anschliessend die vermischte Zusammensetzung, typischerweise in Form einer Raupe, mit mindestens einer Festkörperoberfläche kontaktiert wird und aushärtet.

Beim Vermischen der beiden Komponenten **A** und **B** kommen das Isocyanatgruppen enthaltende Polyurethanpolymer **P** und das latente Polyamin **LA** in Kontakt mit Wasser. Die blockierten Aminogruppen des latenten Polyamins **LA** haben die Eigenschaft, bei Kontakt mit Feuchtigkeit zu hydrolysieren. Die in der Zusammensetzung vorhandenen Isocyanatgruppen reagieren mit dem formal frei werdenden Polyamin, wobei eine zur Blockierung der Aminogruppen eingesetzte Verbindung in Form eines Ketons oder Aldehyds freigesetzt wird. Überschüssige, das heisst nicht mit blockierten Aminogruppen reagierende, Isocyanatgruppen reagieren direkt mit Wasser und bilden dadurch unter anderem Harnstoffgruppen. Als Ergebnis dieser Reaktionen härtet die Zusammensetzung aus; dieser Prozess wird auch als Vernetzung bezeichnet. Die Reaktion der Isocyanatgruppen am hydrolysierenden latenten Polyamin **LA** muss dabei nicht notwendigerweise über freie Aminogruppen erfolgen, sondern kann auch über Zwischenstufen der Hydrolyse verlaufen. Beispielsweise ist es denkbar, dass ehemalige Aldimino- oder Ketiminogruppen des hydrolysierenden latenten Polyamins **LA** als Halbaminal-Gruppen mit den Isocyanatgruppen reagieren.

Falls zur vollständigen Aushärtung der Zusammensetzung zusätzliches Wasser notwendig ist, so kann dieses nach der Applikation der Zusammensetzung aus der Umgebung, insbesondere als Luftfeuchtigkeit, in die applizierte Zusammensetzung eindringen.

Die beschriebene zweikomponentige Zusammensetzung härtet nach dem Vermischen der beiden Komponenten **A** und **B** sehr schnell aus. Sie verfügt sehr rasch über eine hohe Frühfestigkeit. Im ausgehärteten Zustand verfügt sie über elastische Eigenschaften, das heisst eine hohe mechanische Festigkeit bei einer hohen Dehnbarkeit, sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche sehr schnell eine hohe Frühfestigkeit erfordern.

Werden bei der Aushärtung der Zusammensetzung nur die vorgängig beschriebenen geruchsfreien Aldehyde ALD freigesetzt, so entsteht durch die Aushärtung der Zusammensetzung kein störender Geruch, was für viele Anwendungen, insbesondere in Innenräumen, ein grosser Vorteil oder sogar eine Voraussetzung ist.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

Die besonders bevorzugte Ausführungsform, welche ohne Geruch aushärtet, eignet sich besonders für Anwendungen in geschlossenen Räumen, wie beispielsweise das Abdichten von Fugen im Innern von Gebäuden oder das Verkleben von Bauteilen im Innenraum von Fahrzeugen. Die Geruchsfreiheit ist hier besonders erwünscht, und zwar auch während und kurz nach der Applikation des Kleb- oder Dichtstoffs.

In einer bevorzugten Ausführungsform wird die beschriebene Zusammensetzung als elastischer Klebstoff oder Dichtstoff eingesetzt.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyethylen, Polypropylen, Polyester, Epoxidharze; beschichtete Substrate wie pulverbeschichtete Metalle oder Legierungen; sowie Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen oder Behandeln mit Reinigern oder Lösemitteln; oder das Aufbringen eines Haftvermittlers, einer Haftvermittlerlösung oder eines Primers; oder eine Beflammung oder eine Plasmabehandlung, insbesondere eine Luftplasma-Vorbehandlung bei atmosphärischem Umgebungsdruck.

Nach dem Verkleben oder Abdichten der Substrate S1 und S2 mittels der beschriebenen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein industrielles Gut oder ein Konsumgut wie beispielsweise ein Fenster, eine Haushaltmaschine oder ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

Für eine Anwendung der Zusammensetzung als Dichtstoff für beispielsweise Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.

Ein Dichtstoff oder Klebstoff weist bevorzugt eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat und das Applikationsgerät möglichst nicht verschmutzt wird.

Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.

Elastische Verklebungen, beispielsweise im Fahrzeugbau, sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Die Applikation der erfindungsgemässen Zusammensetzung kann bei Raumtemperatur oder tiefer erfolgen. Es ist aber auch möglich, die Komponente **A** und / oder die Komponente **B** vor dem Vermischen auf eine erhöhte Temperatur aufzuheizen, beispielsweise um eine noch schnellere Aushärtungsgeschwindigkeit zu erreichen, oder um die Förderung oder Dosierung oder Vermischung der Komponenten zu erleichtern.

Die beschriebene zweikomponentige Zusammensetzung bestehend aus
a) einer ersten Komponente **A** umfassend (i) mindestens ein Isocyanatgruppen enthaltendes Polyurethanpolymer **P** und (ii) mindestens ein latentes Polyamin **LA;** und
b) einer zweiten Komponente **B,** umfassend (i) mindestens eine Säure **K** und (ii) Wasser
weist zu einem sehr frühen Zeitpunkt nach dem Vermischen der beiden Komponenten **A** und **B** eine hohe Frühfestigkeit auf. Beispielsweise lässt sich mit einer solchen Zusammensetzung bereits 30 Minuten nach der Applikation eine Frühfestigkeit von 1 MPa bei Raumtemperatur erreichen, was mit Zusammensetzungen, wie sie beispielsweise in WO 03/059978 A1 beschrieben sind, nicht erreicht wird. Eine derart schnelle Aushärtung einer Polyurethanzusammensetzung mit elastischen Eigenschaften liess sich bisher nur mit konventionellen zweikomponentigen Zusammensetzungen erreichen, bei welchen eine Isocyanatgruppen enthaltende erste Komponente mit einer zweiten Komponente enthaltend ein Polyamin, gegebenenfalls in latenter Form, vermischt wird, was ein wesentlich aufwändigeres Applikationsverfahren erfordert.

Die Komponente **A** der beschriebenen zweikomponentigen Zusammensetzung härtet auch allein mit Luftfeuchtigkeit aus, wobei die vollständig ausgehärtete Komponente **A** im Wesentlichen dieselben mechanischen Eigenschaften aufweist wie die vollständig ausgehärtete zweikomponentige Zusammensetzung, bestehend aus beiden Komponenten **A** und **B.** Dadurch ist die Anwendung dieser Zuammensetzungen wesentlich vereinfacht. So ist die Zusammensetzung kaum empfindlich auf Schwankungen bei der Dosierung der einzelnen Komponenten **A** und / oder **B,** da ein zu geringer oder zu hoher Anteil der Komponente **B** im Verhältnis zur Komponente **A** wohl einen gewissen Einfluss auf die Aushärtungsgeschwindigkeit hat, aber die mechanischen Eigenschaften der vollständig ausgehärteten Zusammensetzung nicht wesentlich verändert. Ebenso ist es möglich, bei kurzzeitigen Arbeitsunterbrüchen ein Verstopfen der Mischdüse zu vermeiden, indem diese vor Arbeitsunterbruch mit der Komponente **A** allein gespült wird.

Ein weiterer Vorteil der beschriebenen zweikomponentigen Zusammensetzung besteht darin, dass eine sehr grosse Flexibilität bei der Einstellung der Aushärtungsgeschwindigkeit besteht. So kann beispielsweise eine standardisierte Komponente **A,** welche auch als einkomponentiger feuchtigkeitshärtender Kleb- oder Dichtstoff zur Anwendung kommt, mit einer kleinen Menge einer zweiten Komponente **B,** enthaltend mindestens eine Säure **K** und Wasser, in der Aushärtungsgeschwindigkeit stark beschleunigt werden, ohne dass die Komponente **A** umformuliert werden muss. Die Feineinstellung der Aushärtungsgeschwindigkeit ist direkt bei der Applikation möglich, indem der Anteil der Komponente **B** so verändert wird, dass die gewünschte Aushärtungsgeschwindigkeit erreicht wird, oder indem eine Komponente **B** mit einem auf die gewünschte Aushärtungsgeschwindigkeit angepassten Gehalt an Säure **K** verwendet wird.

Die bevorzugte Ausführungsform der beschriebenen zweikomponentigen Zusammensetzung enthaltend Polyaldimine als latentes Polyamin **LA** in der Komponente **A,** wobei die Polyaldimine erhältlich sind aus Aldehyden **ALD,** welche in α-Stellung zur Carbonylgruppe keine C-H-Gruppierungen aufweisen, ergibt lagerstabile erste Komponenten **A,** auch wenn diese hochreaktive aromatische Isocyanatgruppen wie diejenigen von TDI und MDI enthalten.

Die besonders bevorzugte Ausführungsform der beschriebenen zweikomponentigen Zusammensetzung, bei welcher geruchsfreie Aldehyde **ALD** der eingeschränkten Formel (I b) zur Herstellung des Polyaldimins der Komponente **A** verwendet werden, ergibt geruchsfrei aushärtende Zusammensetzungen, was für viele Anwendungen ein grosser Vorteil oder eine unabdingbare Voraussetzung ist.

Besonders bevorzugt sind zweikomponentige Zusammensetzungen, welche als latente Polyamine **LA** in der Komponente **A** Polyaldimine enthalten, welche vorzugsweise erhältlich sind aus Aldehyden **ALD,** welche in α-Stellung zur Carbonylgruppe keine C-H-Gruppierungen aufweisen, sowie welche als Säure K in der Komponente B Salicylsäure enthalten.

### Beispiele

### Beschreibung der Prüfmethoden

Die **Auspresskraft** der Komponente **A** wurde an jeweils einer frisch geöffneten, raumtemperaturwarmen Kartusche ermittelt, wobei die Zusammensetzung an der Kartuschenspitze bei 23 °C ohne Zumischung einer wasserhaltigen Komponente durch eine Öffnung von 5 mm gepresst wurde. Das Auspressen erfolgte durch eine Zugprüfmaschine mit einer konstanten Geschwindigkeit von 60 mm/min. Die Veränderung der Auspresskraft ist ein Mass für die Lagerstabilität einer Polyurethanzusammensetzung.

Die **Frühfestigkeit** wurde wie folgt bestimmt. Zuerst wurden jeweils zwei Glasplättchen der Dimension 40 x 100 x 6 mm auf der zu verklebenden Seite mit Sika® Aktivator (erhältlich bei Sika Schweiz AG) vorbehandelt. Nach einer Ablüftezeit von 10 Minuten wurde der Klebstoff als Dreiecksraupe entlang der Längskante auf einem der Glasplättchen aufgetragen. Nach ca. einer Minute wurde der applizierte Klebstoff unter Verwendung des zweiten Glasplättchens mittels einer Zugmaschine (Zwick) auf 5 mm Klebedicke verpresst (entsprechend einer Verklebungsbreite von ca. 1 cm), dann bei 23 °C und 50% relativer Luftfeuchtigkeit gelagert. Jeweils nach der angegebenen Zeit (Anzahl Minuten) wurden pro Ansatz je drei der verklebten Glasplättchen mit einer Zuggeschwindigkeit von 200 mm/min auseinandergezogen, die maximale Kraft hierfür in MPa registriert und über die drei Proben gemittelt. Für diese Versuchsanordnung gilt: 1 MPa entspricht 100 N/cm.

Die **Offenzeit** (Zeit, innerhalb welcher ein zweikomponentiger Klebstoff verarbeitet sein muss) wurde folgendermassen bestimmt: Bei 23 °C und 50% relativer Luftfeuchtigkeit wurde der Klebstoff in Form einer Dreiecksraupe von ca. 1 cm Querschnitt auf ein Glasplättchen aufgetragen. In regelmässigen zeitlichen Abständen wurden solche mit einer Klebstoffraupe beschichteten Glasplättchen jeweils mit einem zweiten Glasplättchen belegt, welches unverzüglich auf eine Klebedicke von 5 mm verpresst wurde. Die dabei aufgewendete Kraft wurde gemessen. Sobald eine Verpresskraft von 0.04 MPa überschritten ist, ist die Offenzeit des Klebstoffes vorbei.

Als Mass für die **Aushärtungsgeschwindigkeit** dient die Geschwindigkeit zum Aufbau der Frühfestigkeit und/oder die Dauer der Offenzeit.

Die **Zugscherfestigkeit** wurde gemessen in Anlehnung an DIN EN 1465. Es wurden Floatglasplättchen verwendet, welche mit Sika Cleaner-205 vorgängig gereinigt wurden. Die Glasplättchen wurden in der in der Norm beschriebenen Art angeordet, sodass eine mit Klebstoff gefüllte Überlappung der Dimensionen 10 bis 12 mm Breite, 25 mm Länge und 4 bis 5 mm Dicke entstand. Die so hergestellten Prüfkörper wurden zur Aushärtung während 7 Tagen bei Normklima (23±1 °C, 50±5 % relative Luftfeuchtigkeit) gelagert und anschliessend mit einer Querjochgeschwindigkeit von 20 mm/min bis zum Bruch auseinandergezogen.

Die **Zugfestigkeit** und die **Bruchdehnung** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 2 mm.

### a) Herstellung der Polyurethanpolymere P

### Polymer P1

1300 g Polyol Acclaim® 4200 N (Bayer; low monol Polyoxypropylendiol, OH-Zahl 28.0 mg KOH/g, Wassergehalt 0.02 Gewichts-%), 2590 g Polyol Caradol® MD34-02 (Shell; Polyoxypropylenpolyoxyethylen-Triol, Ethylenoxidterminiert, OH-Zahl 35.0 mg KOH/g, Wassergehalt 0.03 Gewichts-%), 610 g 4,4`-Methylendiphenyldiisocyanat (MDI; Desmodur® 44 MC L, Bayer) und 500 g Diisodecylphthalat (DIDP; Palatinol® Z, BASF) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 2.05 Gewichts-%.

### Polymer P2

1230 g Polyol Acclaim® 4200 N (Bayer; low monol Polyoxypropylendiol, OH-Zahl 28.0 mg KOH/g, Wassergehalt 0.02 Gewichts-%), 615 g Polyol Caradol® MD34-02 (Shell; Polyoxypropylenpolyoxyethylen-Triol, Ethylenoxidterminiert, OH-Zahl 35.0 mg KOH/g, Wassergehalt 0.03 Gewichts-%) und 155 g Desmodur® T-80 P (Bayer; 2,4- und 2,6-Toluylendiisocyanat im Verhältnis 80:20) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 1.55 Gewichts-%.

### b) Herstellung des Polyaldimins

In einem Rundkolben wurden unter Stickstoffatmosphäre 625 g (2.20 mol) 2,2-Dimethyl-3-lauroyloxy-propanal vorgelegt. Unter kräftigem Rühren wurden aus einem Eintropftrichter langsam 250 g (2.10 mol NH₂) Jeffamine® D-230 (Huntsman;. alpha, omega-Polyoxypropylendiamin, Amin-Equivalentgewicht 119 g/Eq) zugegeben. Danach wurden bei 80 °C die flüchtigen Bestandteile im Vakuum vollständig abdestilliert. Es wurden 837 g gelbliches, bei Raumtemperatur flüssiges Reaktionsprodukt erhalten mit einem Aldimin-Gehalt, bestimmt als Amin-Gehalt, von 2.5 mmol NH₂/g.

### c) Herstellung der Harnstoff-Verdicker-Paste

In einem Vakuummischer wurden 1000 g Diisodecylphthalat (DIDP; Palatinol® Z, BASF) und 160 g 4,4'-Methylendiphenyldiisocyanat (MDI; Desmodur® 44 MC L, Bayer) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt, dann abgekühlt und anschliessend weiterverwendet.

### d) Herstellung der Komponente A-1

In einem Vakuummischer wurden 2900 g Polymer **P1,** 550 g Polymer **P2,** 2584 g Harnstoff-Verdicker-Paste, 418 g des beschriebenen Polyaldimins, 3200 g Kreide (Omya® 5 GU, Omya; getrocknet), 320 g hydrophobierte pyrogene Kieselsäure (Aerosil® R972, Degussa-Hüls AG), und 28 g einer Lösung von Salicylsäure (5 Gewichts-%) in Dioctyladipat, unter Feuchtigkeitsausschluss zu einer knollenfreien, homogenen Paste verarbeitet, welche unter Ausschluss von Feuchtigkeit aufbewahrt wurde.

Die Auspresskraft am Folgetag der Herstellung betrug 500 N, nach einer Lagerung während 2 Tagen bei 70 °C betrug die Auspresskraft 685 N.

### e) Herstellung der zweiten Komponenten B

### Komponente B-1 (erfindungsgemäss)

In einem Vakuummischer wurden 54 g Salicylsäure, 785 g deionisiertes Wasser, 2446 g Diisodecylphthalat (DIDP; Palatinol® Z, BASF), 690 g pyrogene Kieselsäure (Aerosil® 200, Degussa-Hüls AG) und 1025 g Kreide (Omya® 5 GU, Omya) zu einer knollenfreien Paste verarbeitet und in einem dichten Behälter aufbewahrt.

### Komponente B-2 (Vergleich, ohne Säure K)

In einem Vakuummischer wurden 785 g deionisiertes Wasser, 2500 g Diisodecylphthalat (DIDP; Palatinol® Z, BASF), 690 g pyrogene Kieselsäure (Aerosil® 200, Degussa-Hüls AG) und 1025 g Kreide (Omya® 5 GU, Omya) zu einer knollenfreien Paste verarbeitet und in einem dichten Behälter aufbewahrt.

### Komponente B-3 (Vergleich, Stand der Technik WO 03/059978A1)

Ein ionische Gruppen enthaltendes organisches Polymer mit einem mittlerem Molekulargewicht von ca. 20'000 wurde durch Polyaddition von Isophorondiisocyanat (IPDI; Vestanat® IPDI, Degussa) mit Polyol Caradol® ED56-11 (Shell), Aminoethylethanolamin und 2,2-Bis-(hydroxymethyl)-propionsäure in N-Methylpyrrolidon, anschliessender Neutralisation mit Triethylamin und Zugabe von Wasser bis zu einem Wassergehalt von 25 Gewichts-% hergestellt. Es wurde eine homogene Paste erhalten, die auch nach längerem Lagern unverändert blieb und kein Wasser abschied.

### f) Mischen und Ausprüfen der Klebstoffe

### Beispiele 1 bis 4 (erfindungsgemäss) und Beispiele 5 und 6 (Vergleichsbeispiele)

Die Komponente **A-1** wurde jeweils mit unterschiedlichen Mengen der Komponente **B-1** beziehungsweise **B-2** vermischt, wobei die Mengen aus der Tabelle 1 ersichtlich sind. Die einzelnen Komponenten wurden mittels einer Dosierpumpe gefördert und durch einen geeigneten statischen Mischer im wesentlichen homogen vermischt. Die Resultate der Frühfestigkeiten sind in der Tabelle 2 dargestellt, die weiteren Prüfresultate sind in der Tabelle 3 dargestellt.

### Beispiel 7 (Vergleichsbeispiel)

Die Komponente **A-1** wurde anhand der Angaben der Tabelle 1 mit der Komponente **B-3** vermischt. Das Mischen der beiden Komponenten **A-1** und **B-3** erfolgte kontinuierlich während der Applikation mittels eines Dosierausatzes des Typs Sika® Booster (erhältlich bei Sika Schweiz AG), bei dem die im integrierten Behälter vorhandene Substanz durch die Komponente **B-3** ersetzt worden war. Der so modifizierte Sika® Booster wurde auf eine die Komponente **A-1** enthaltende Kartusche aufgesetzt und passiv durch die Druckaufbeschlagung der Kartusche mittels einer handelsüblichen Kartuschenpresse betrieben. Auf die Austrittsöffnung des modifizierten Sika® Booster wurde ein Statikmischer, mit einem Durchmesser von 16 mm und 6 Mischelementen, entsprechend einem Mischweg von 70 mm, aufgeschraubt. Durch diese Mischvorrichtung erfolgte die Vermischung der beiden Komponenten **A-1** und **B-3** der zweikomponentigen Zusammensetzung im Wesentlichen schichtenartig.

Die Resultate der Frühfestigkeiten sind in Tabelle 2 dargestellt, die weiteren Prüfresultate sind in Tabelle 3 dargestellt.

### Beispiel 8 (Vergleich, Referenz)

Die Komponente **A-1** wurde als einkomponentiger feuchtigkeitshärtender Klebstoff ohne Beimischen einer zweiten Komponente **B** ausgeprüft. Die Resultate der Frühfestigkeiten sind in Tabelle 2 angegeben, die weiteren Prüfresultate sind in Tabelle 3 dargestellt.

**Tabelle 1: Zusammensetzung der Klebstoffe der Beispiele 1 bis 4 und der Vergleichsbeispiele 5 bis 8 in Gewichtsteilen.**

| **Beispiel** | **1** | **2** | **3** | **4** | **5** (Vgl.) | **6** (Vgl.) | **7** (Vgl.) | **8** (Ref.) |
|---|---|---|---|---|---|---|---|---|
| Komponente **A-1** | 100 | 100 | 100 | 100 | 100 | 100 | 100 | 100 |
| Komponente **B-1** | 2 | 3 | 4 | 5 | - | - | - | - |
| Komponente **B-2** | - | - | - | - | 3 | 4 | - | - |
| Komponente **B-3** | - | - | - | - | - | - | 2 | - |

**Tabelle 2: Frühfestigkeit der Klebstoffe der Beispiele 1 bis 4 und der Vergleichsbeispiele 5 bis 8, bestimmt nach verschiedenen Zeiten.**

| **Beispiel** | **1** | **2** | **3** | **4** | **5** (Vgl.) | **6** (Vgl.) | **7** (Vgl.) | **8** (Ref.) |
|---|---|---|---|---|---|---|---|---|
| **Frühfestigkeit** [MPa] nach: | | | | | | | | |
| 30 Min. | 0.15 | 0.6 | 0.9 | 1.1 | 0.1 | 0.2 | | |
| 90 Min. | | | 1.7 | | | | 0.3 | |
| 120 Min. | | | | | | | 0.5 | 0.1 |
| 180 Min. | | | 2.3 | | | | 0.7 | |
| 240 Min. | | | 2.5 | | | | 1.0 | 0.3 |

**Tabelle 3: Offenzeit und mechanische Eigenschaften der Klebstoffe der Beispiele 1 bis 4 und der Vergleichsbeispiele 5 bis 8.**

| **Beispiel** | **1** | **2** | **3** | **4** | **5** (Vgl.) | **6** (Vgl.) | **7** (Vgl.) | **8** (Ref.) |
|---|---|---|---|---|---|---|---|---|
| Offenzeit [Min.] | 10 | 5 | 3 | 2 | 13 | 10 | 20 | 45¹ |
| Zugscherfestigkeit [MPa] | | 2.2 | 2.2 | 2.2 | | | 2.2 | 2.4 |
| Zugfestigkeit [MPa] | | 3.8 | 3.7 | 3.6 | | | | 3.8 |
| Bruchdehnung [%] | | 480 | 450 | 450 | | | | 500 |

| | | | | | | | | |
|---|---|---|---|---|---|---|---|---|
| ¹ Hautbildungszeit (bei 23 °C und 50 % relativer Feuchtigkeit) | | | | | | | | |

Aus den Tabellen 2 und 3 ist ersichtlich, dass die Beispiele 1 bis 4, welche die Komponente **B-1** enthaltend Wasser und Salicylsäure enthalten, schnell aushärten, wobei die Aushärtungsgeschwindigkeit mit steigendem Anteil der Komponente **B-1** deutlich ansteigt. Dies ist sowohl aus dem Aufbau der Frühfestigkeiten als auch aus den jeweiligen Offenzeiten ersichtlich.

Die Beispiele 2 und 3, welche 3 und 4 Gewichtsteile der Komponente **B-1** auf 100 Gewichtsteile der Komponente **A-1** enthalten, weisen nach 30 Minuten bereits Frühfestigkeiten von 0.6 und 0.9 MPa und Offenzeiten von 5 und 3 Minuten auf, während die Vergleichsbeispiele 5 und 6, welche die jeweiligen Mengen der Komponente **B-2** (ohne Salicylsäure) enthalten, nach 30 Minuten erst Frühfestigkeiten von 0.1 und 0.2 MPa und Offenzeiten von 13 und 10 Minuten aufweisen. Die Salicylsäure in der Komponente **B-1** bewirkt also eine starke Beschleunigung der Aushärtung.

Das Vergleichsbeispiel 7 enthält die Komponente **B-3**, wobei diese im Wesentlichen schichtenartig eingemischt ist. Die Aushärtungsgeschwindigkeit ist deutlich langsamer als beispielsweise bei Beispiel 2, welches in der Komponente **B** eine vergleichbare Menge Wasser enthält. Der Aufbau der Frühfestigkeit ist stark verzögert, und die Offenzeit ist ebenfalls deutlich länger.

Das Vergleichsbeispiel 8 enthält keine Komponente **B.** Die Komponente **A-1** ist als einkomponentiger Klebstoff mittels Luftfeuchtigkeit ausgehärtet. Die Aushärtungsgeschwindigkeit ist entsprechend gering im Vergleich mit den zweikomponentigen Klebstoffen. Die Werte für die Zugscherfestigkeit, die Zugfestigkeit und die Bruchdehnung sind aber nicht in einem relevanten Ausmass verschieden von den entsprechenden Werten der zweikomponentig ausgehärteten Beispiele.

Bei allen Klebstoffen der Beispiele 1 bis 8 ist sowohl während als auch nach der Aushärtung kein Geruch wahrnehmbar.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Zweikomponentige Zusammensetzung bestehend aus
a) einer ersten Komponente **A,** umfassend
(i) mindestens ein Isocyanatgruppen enthaltendes Polyurethanpolymer **P** und
(ii) mindestens ein latentes Polyamin **LA,** und
b) einer zweiten Komponente **B,** umfassend
(i) mindestens eine Säure **K** und
(ii) Wasser.

2. Zweikomponentige Zusammensetzung gemäss Anspruch 1, **dadurch gekennzeichnet, dass** das latente Polyamin **LA** ein Polyaldimin ist.

3. Zweikomponentige Zusammensetzung gemäss Anspruch 1 oder 2, **dadurch gekennzeichnet, dass** das latente Polyamin **LA** ein Polyaldimin ist, welches erhältlich ist aus mindestens einem Polyamin **PA** mit aliphatischen primären Aminogruppen und mindestens einem Aldehyd **ALD,** der in α-Stellung zur Carbonylgruppe keine C-H-Gruppierung aufweist.

4. Zweikomponentige Zusammensetzung gemäss Anspruch 1 oder 2, **dadurch gekennzeichnet, dass** das latente Polyamin **LA** ein Polyaldimin ist, welches erhältlich ist aus der Umsetzung
eines Amins **C** der Formel (III) und einem Aldehyd **ALD,** der in α-Stellung zur Carbonylgruppe keine C-H-Gruppierung aufweist, 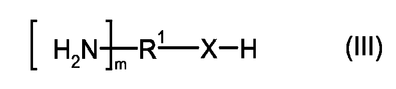 wobei
m für 1 oder 2 steht, bevorzugt für 1,
R¹ für einen (m+1)-wertigen Kohlenwasserstoffrest mit 2 bis 12 C-Atomen steht, welcher gegebenenfalls mindestens ein Heteroatom enthält, insbesondere in Form von Ether-Sauerstoff oder tertiärem Amin-Stickstoff, und
X für O, S oder N-R⁶ steht,
wobei R⁶
entweder für einen einwertigen Kohlenwasserstoffrest mit 1 bis 20 C-Atomen steht, welcher gegebenenfalls mindestens eine Carbonat-, Nitril-, Nitro-, Phosphonat-, Sulfon- oder Sulfonatgruppe aufweist,
oder für -R⁷-NH₂ steht, wobei R⁷ für einen zweiwertigen Kohlenwasserstoffrest steht, welcher gegebenenfalls Heteroatome enthält, insbesondere in Form von Ether-Sauerstoff oder tertiärem Amin-Stickstoff,
und nachfolgender Umsetzung des gebildeten Aldimins mit einem Polyisocyanat.

5. Zweikomponentige Zusammensetzung gemäss Anspruch 3 oder 4, **dadurch gekennzeichnet, dass** der Aldehyd **ALD** die Formel (I) oder (II) aufweist, 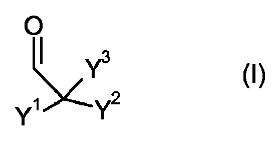 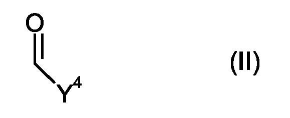 wobei
Y¹ und Y² entweder,
unabhängig voneinander, je für einen einwertigen Kohlenwasserstoffrest mit 1 bis 12 C-Atomen stehen,
oder zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen, ist, und
Y³ für einen einwertigen Kohlenwasserstoffrest steht, welcher gegebenenfalls mindestens ein Heteroatom, insbesondere Sauerstoff in Form von Ether-, Carbonyl- oder Ester-Gruppen, aufweist; und
Y⁴ entweder
für eine substituierte oder unsubstituierte Aryl- oder Heteroaryl-Gruppe steht, welche eine Ringgrösse zwischen 5 und 8, bevorzugt 6, Atomen aufweist;
oder für 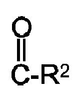 steht, wobei R² für ein Wasserstoffatom oder für eine Alkoxygruppe steht;
oder für eine substituierte oder unsubstituierte Alkenyl- oder Arylalkenylgruppe mit mindestens 6 C-Atomen steht.

6. Zweikomponentige Zusammensetzung gemäss Anspruch 5, **dadurch gekennzeichnet, dass** der Aldehyd **ALD** die Formel (I a) aufweist, 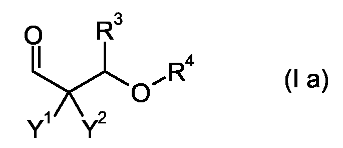 wobei
R³ für ein Wasserstoffatom oder für eine Alkyl- oder Arylalkylgruppe und
R⁴ für eine Alkyl- oder Arylalkylgruppe steht.

7. Zweikomponentige Zusammensetzung gemäss Anspruch 5, **dadurch gekennzeichnet, dass** der Aldehyd **ALD** die Formel (I b) aufweist, 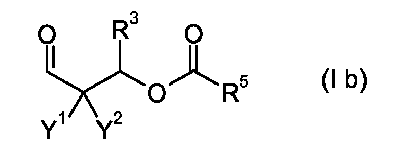 wobei
R³ für ein Wasserstoffatom oder für eine Alkyl- oder Arylalkylgruppe und
R⁵ entweder für
ein Wasserstoffatom oder
eine Alkyl- oder Arylalkyl- oder Arylgruppe, gegebenenfalls mit mindestens einem Heteroatom, insbesondere mit mindestens einem Ether-Sauerstoff, und gegebenenfalls mit mindestens einer Carboxylgruppe, und gegebenenfalls mit mindestens einer Estergruppe,
oder für eine einfach oder mehrfach ungesättigte lineare oder verzweigte Kohlenwasserstoffkette steht.

8. Zweikomponentige Zusammensetzung gemäss Anspruch 7, **dadurch gekennzeichnet, dass** die Zusammensetzung geruchsfrei aushärtet, und dass
R⁵ entweder
für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, oder
für eine einfach oder mehrfach ungesättigte lineare oder verzweigte Kohlenwasserstoffkette mit 11 bis 30 Kohlenstoff-Atomen steht.

9. Zweikomponentige Zusammensetzung gemäss einem der vorhergehenden Ansprüche, **dadurch gekennzeichnet, dass** das Polyurethanpolymer **P** hergestellt ist aus mindestens einem Polyisocyanat und mindestens einem Polyol.

10. Zweikomponentige Zusammensetzung gemäss Anspruch 9, **dadurch gekennzeichnet, dass** das Polyol eine mittlere OH-Funktionalität von 1.6 bis 3 aufweist.

11. Zweikomponentige Zusammensetzung gemäss Anspruch 9 oder 10, **dadurch gekennzeichnet, dass** das Polyol ein Polyoxyalkylenpolyol, insbesondere ein Polyoxyalkylendiol oder -triol, insbesondere ein Polyoxypropylendiol oder -triol oder ein EO-endcapped Polyoxypropylendiol oder -triol ist.

12. Zweikomponentige Zusammensetzung gemäss einem der Ansprüche 9 bis 11, **dadurch gekennzeichnet, dass** als Polyisocyanat mindestens ein aromatisches Polyisocyanat, insbesondere 2,4- oder 2,6-Toluylendiisocyanat oder beliebige Gemische dieser Isomeren (TDI), oder 4,4'-, 2,4'- oder 2,2'-Diphenylmethandiisocyanat oder beliebige Gemische dieser Isomeren (MDI), verwendet wird.

13. Zweikomponentige Zusammensetzung gemäss einem der vorhergehenden Ansprüche, **dadurch gekennzeichnet, dass** das latente Polyamin LA im Verhältnis von 0.1 bis 1.0, bevorzugt von 0.3 bis 0.9, besonders bevorzugt 0.4 bis 0.8, Equivalent blockierte Aminogruppen pro Equivalent Isocyanatgruppen vorliegt.

14. Zweikomponentige Zusammensetzung gemäss einem der vorhergehenden Ansprüche, **dadurch gekennzeichnet, dass** die Säure **K** in der Komponente **B** in einer Menge von 0.1 bis 10 Gewichts-%, bevorzugt 0.3 bis 5 Gewichts-%, bezogen auf die Komponente **B** vorhanden ist.

15. Zweikomponentige Zusammensetzung gemäss einem der vorhergehenden Ansprüche, **dadurch gekennzeichnet, dass** die Säure **K** eine organische Säure ist.

16. Zweikomponentige Zusammensetzung gemäss Anspruch 15, **dadurch gekennzeichnet, dass** die Säure **K** eine Carbonsäure oder eine Sulfonsäure ist.

17. Zweikomponentige Zusammensetzung gemäss Anspruch 16, **dadurch gekennzeichnet, dass** die Säure **K** Benzoesäure oder Salicylsäure ist.

18. Zweikomponentige Zusammensetzung gemäss einem der vorhergehenden Ansprüche, **dadurch gekennzeichnet, dass** das Wasser in der Komponente **B** in einer Menge vorhanden ist, dass das Verhältnis der durch die Komponente **B** eingebrachten Menge Wasser zur Wassermenge, welche zur vollständigen Aushärtung der Komponente **A** notwendig ist, 0.5 bis 10, bevorzugt 1 bis 7.5, noch mehr bevorzugt 1.5 bis 5, beträgt.

19. Zweikomponentige Zusammensetzung gemäss einem der vorhergehenden Ansprüche, **dadurch gekennzeichnet, dass** die Komponente **B** in einer Menge von 0.5 bis 10 Gewichtsteilen bezogen auf 100 Gewichtsteile der Komponente **A** vorliegt.

20. Verwendung einer zweikomponentigen Zusammensetzung gemäss einem der Ansprüche 1 bis 19 als Klebstoff, Dichtstoff oder Belag, insbesondere als Klebstoff oder Dichtstoff.

21. Verwendung gemäss Anspruch 20 für das Verkleben von Bauteilen im Hoch- oder Tiefbau und bei der Fertigung oder Reparatur von industriellen Gütern oder Konsumgütern, insbesondere von Transportmitteln.

22. Verwendung gemäss Anspruch 20 für das Abdichten von Fugen, Nähten oder Hohlräumen in der industriellen Fertigung oder Reparatur, oder im Hoch- oder Tiefbau.

23. Verfahren des Verklebens umfassend die Schritte
(i) Applikation einer Zusammensetzung gemäss einem der Ansprüche 1 bis 19 auf ein Substrat **S1** und/oder ein Substrat **S2,**
(ii) Fügen der Teile innerhalb der Offenzeit
(ii) Aushärtung der Zusammensetzung,
wobei die Substrate **S1** und **S2** gleich oder verschieden voneinander sind.

24. Verfahren des Abdichtens umfassend die Schritte
(i) Applikation einer Zusammensetzung gemäss einem der Ansprüche 1 bis 19 zwischen ein Substrat **S1** und ein Substrat **S2**,
(ii) Aushärtung der Zusammensetzung,
wobei die Substrate **S1** und **S2** gleich oder verschieden voneinander sind.

25. Verfahren gemäss Anspruch 23 oder 24, **dadurch gekennzeichnet, dass** mindestens eines der Substrate **S1** oder **S2** Glas, Glaskeramik, Beton, Mörtel, Backstein, Ziegel, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyethylen, Polypropylen, Polyester, Epoxidharz; eine Pulverbeschichtung, eine Farbe oder ein Lack, insbesondere ein Automobillack, ist.

26. Verklebter oder abgedichteter Artikel, welcher mittels eines Verfahrens zur Verklebung oder Abdichtung gemäss einem der Ansprüche 23 bis 25 hergestellt wird.

27. Verklebter oder abgedichteter Artikel gemäss Anspruch 26, **dadurch gekennzeichnet, dass** der Artikel ein Bauwerk, insbesondere ein Bauwerk des Hoch- oder Tiefbaues, oder ein Teil davon, oder ein Industrie- oder Konsumgut oder ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.
